# DEMANDE DE BREVET EUROPEEN

(11) **EP 2 881 291 A1**
(43) Date de publication de la demande: **10.06.2015**
(21) Numéro de dépôt: 14195626.8
(22) Date de dépôt: 01.12.2014
(51) Int. Cl.: B60S 1/38, B60S 1/40

(54) **Dispositif de connexion bras-balais, balai d'essuie-glace et ensemble d'essuyage**

(30) Priorité: 03.12.2013 FR 1362042
(71) Demandeur: Valeo Systèmes d'Essuyage, 78321 Le Mesnil Saint Denis (FR)
(72) Inventeur: Moneyron, Patrick, 63670 LE CENDRE (FR); Espinasse, Philippe, 63114 COUDES (FR); Terrasse, William, 63270 VIC LE COMTE (FR)
(74) Mandataire: Callu Danseux, Violaine

(57) **Abrégé**

L'invention concerne un dispositif de connexion (6) entre un bras (3) et un balai d'essuie-glace, ledit dispositif comprenant un élément de liaison comprenant une cavité de connexion (7), ladite cavité de connexion (7) comprenant un axe transversal (8) configuré pour coopérer avec une extrémité (5) du bras d'actionnement (3) pour articuler le balai d'essuie-glace (2) audit bras d'actionnement (3), dans lequel l'axe transversal (8) comprend au moins une cavité (11).

## Description

### DOMAINE TECHNIQUE

La présente invention concerne un dispositif de connexion bras-balai, un balai d'essuie-glace et un ensemble d'essuyage pour panneaux vitrés de véhicules automobiles.

### ETAT DE LA TECHNIQUE

Les balais d'essuie-glace comportent des moyens de connexion leur permettant d'être couplés aux bras d'actionnement du véhicule automobile. Certains moyens de connexion sont dits « à axe de pivotement latéral ». Pour cela, le balai présente une cavité de connexion comportant un axe transversal autour duquel s'articule une extrémité du bras.

La section de l'axe transversal s'inscrit dans un diamètre relativement important par rapport à l'épaisseur des flancs de la cavité de connexion. Ces dimensions importantes de l'axe transversal peuvent poser des problèmes de réalisation lors de la fabrication du balai d'essuie-glace. En effet, le refroidissement au centre de l'axe transversal peut être plus long que celui des flancs de la cavité de connexion, la rétractation induite par ce refroidissement plus long pouvant risquer de fragiliser l'axe transversal. Egalement, lors du moulage de la cavité de connexion, le remplissage peut être incomplet. Des microbulles d'air peuvent se créer au niveau de l'axe transversal et ainsi le fragiliser.

### EXPOSE DE L'INVENTION

Un des buts de la présente invention est de proposer un dispositif de connexion bras-balai, un balai d'essuie-glace et un ensemble d'essuyage pour véhicules automobiles, qui permette de réaliser une cavité de connexion robuste et de façon simple.

A cet effet, l'invention a pour objet un dispositif de connexion entre un bras et un balai d'essuie-glace, ledit dispositif comprenant un élément de liaison comprenant une cavité de connexion, ladite cavité de connexion comprenant un axe transversal configuré pour coopérer avec une extrémité du bras d'actionnement pour articuler le balai d'essuie-glace audit bras d'actionnement, caractérisé en ce que l'axe transversal comprend au moins une cavité.

L'élément de liaison mentionné ci-dessus peut-être constitué d'une ou plusieurs pièces, mais est préférablement réalisé d'une seule pièce, notamment d'une seule pièce en matière plastique.

La cavité de l'axe transversal permet de réduire de façon localisée la quantité de matière nécessaire à la réalisation de l'axe transversal et par conséquent de réduire les risques de retassures au cours de la fabrication du balai, suite au refroidissement de la cavité de connexion. On augmente par conséquent la résistance de l'axe transversal. Egalement, la ou les cavités de l'axe transversal permettent de mieux répartir le matériau de moulage de la cavité de connexion, évitant la formation de bulles d'air dans l'axe transversal.

Par « cavité de l'axe transversal » au sens de l'invention, on entend notamment un creux ou espace évidé dans le corps de l'axe transversal. Il doit être entendu que les méplats réalisés en surface de l'axe transversal de façon connue dans l'art antérieur, ne constituent pas des cavités au sens de l'invention, notamment car ils ne visent ni à empêcher les retassures de moulage ni à empêcher la formation de bulles d'air à l'intérieur de l'axe transversal.

Selon une caractéristique de l'invention, ladite cavité de l'axe transversal est agencée à une extrémité longitudinale de l'axe transversal.

Selon une autre caractéristique de l'invention, ladite cavité de l'axe transversal s'étend depuis un flanc de la cavité de connexion.

Avantageusement, ladite cavité de l'axe transversal est traversante. Par « traversante », on entend que ladite cavité traverse l'axe transversal de part en part.

Plus préférablement, la ou les cavités de l'axe transversal sont localisées à la zone de contact entre l'axe transversal et les flancs de la cavité de connexion, ce qui permet de diminuer la surface de cette zone de contact.

Selon un exemple de réalisation, la cavité de connexion comporte deux cavités, notamment deux cavités traversantes. Chaque cavité peut être ménagée à une extrémité respective de l'axe transversal raccordée à un flanc respectif de la cavité de connexion.

Selon un exemple de réalisation, la direction principale de l'au moins une cavité de l'axe transversal croise l'axe central de l'axe transversal.

Selon un exemple de réalisation, la direction principale de l'au moins une cavité est perpendiculaire à l'axe central de l'axe transversal.

Selon un exemple de réalisation, l'axe transversal comprend au moins un méplat. Ledit méplat est de préférence perpendiculaire à au moins un flanc de la cavité de connexion.

Selon un exemple de réalisation, la direction principale de l'au moins une cavité de l'axe transversal est parallèle au méplat.

Selon un exemple de réalisation, la cavité de connexion est obtenue par moulage, notamment d'une matière plastique.

L'invention a aussi pour objet un balai d'essuie-glace comprenant un dispositif de connexion selon l'une quelconque des définitions ci-dessus.

L'invention a encore pour objet un ensemble d'essuyage caractérisé en ce qu'il comporte un balai d'essuie-glace tel que décrit précédemment et un bras d'actionnement.

### DESCRIPTION SOMMAIRE DES DESSINS

D'autres avantages et caractéristiques apparaîtront à la lecture de la description d'un exemple non limitatif de réalisation de l'invention, ainsi que sur les figures annexées sur lesquelles :
- la figure 1 représente une vue schématique d'un balai d'essuie-glace assemblé à un bras de véhicule automobile, en position d'essuyage,
- la figure 2 représente une vue en perspective d'une cavité de connexion du balai d'essuie-glace,
- la figure 3 représente une vue de dessus d'un détail de la cavité de connexion du balai d'essuie-glace de la figure 2,
- la figure 4 représente une vue en perspective d'une extrémité d'un bras d'actionnement destinée à coopérer avec le balai d'essuie-glace de la figure 2,
- la figure 5 représente une vue schématique en coupe d'un dispositif de connexion bras-balai selon un exemple de réalisation, en position d'assemblage,
- la figure 6 représente une vue analogue à la figure 5 en position de verrouillage, prêt à être dés-enclenché, et
- la figure 7 représente une vue analogue à la figure 6 en position de verrouillage et en position d'essuyage.

Sur ces figures, les éléments identiques ou analogues portent les mêmes numéros de référence.

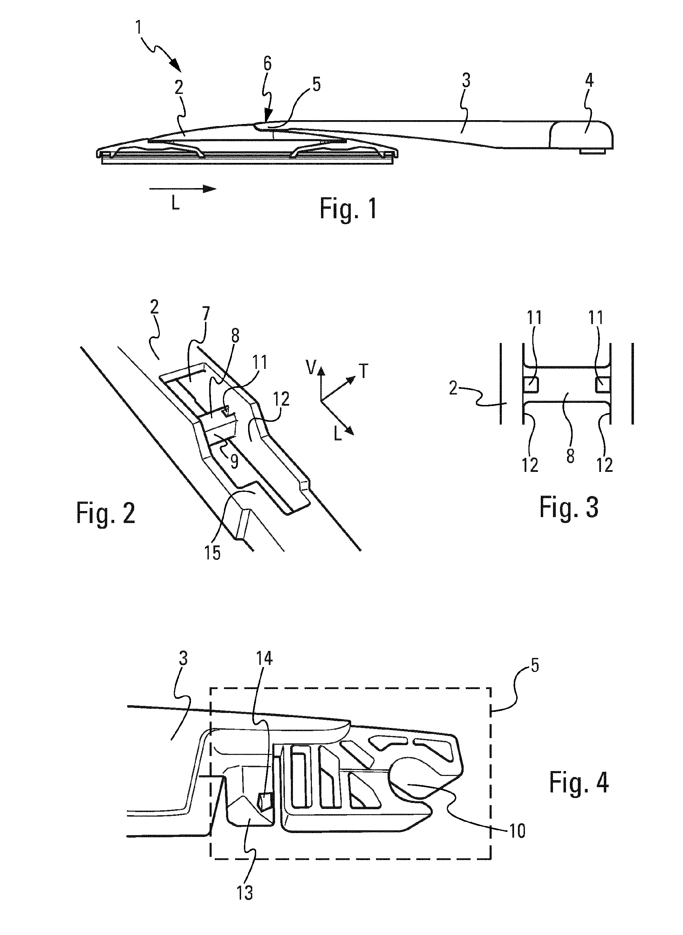

Dans la suite de la description, on adoptera à titre non limitatif des directions longitudinale, verticale et transversale indiquées sur la figure 2 par le trièdre (L, V, T) fixe par rapport au balai. La direction longitudinale L correspond à la direction principale des balais d'essuie-glaces à plat. Tel que le balai est illustré, le plan horizontal correspond au plan (L, T).

### DESCRIPTION DÉTAILLÉE

Les figures 1 à 7 illustrent un exemple de réalisation d'un ensemble d'essuyage 1 comportant un balai d'essuie-glace 2 pour véhicule automobile couplé à un bras d'actionnement 3. Cet ensemble d'essuyage 1 peut être agencé à l'avant du véhicule pour l'essuyage du pare-brise ou à l'arrière pour l'essuyage de la lunette arrière.

Le bras d'actionnement 3 comprend une tête pivotante 4 destinée à être entraînée en rotation pour l'essuyage du panneau vitré du véhicule. A l'extrémité opposée à la tête pivotante 4, le bras d'actionnement 3 comporte une extrémité 5 couplée au balai d'essuie-glace 2 au moyen d'un dispositif de connexion bras-balai 6.

Comme on peut mieux le voir sur la figure 2, le dispositif de connexion bras-balai 6 comprend un élément de liaison comprenant une cavité de connexion 7.

La cavité de connexion 7, par exemple traversante dans l'épaisseur du balai d'essuie-glace 2, est ménagée sensiblement au centre du balai 2. La cavité de connexion 7 s'étend principalement dans la direction principale longitudinale L du balai 2 qui correspond à la direction principale des balais d'essuie-glaces. La cavité de connexion 7 est par exemple obtenue par moulage.

La cavité de connexion 7 comprend un axe transversal 8 coopérant avec l'extrémité 5 du bras d'actionnement 3 pour articuler le balai 2 autour du bras 3.

La section de l'axe transversal 8 s'inscrit dans une section cylindrique de plus grande surface. L'axe transversal 8 comporte par exemple deux méplats 9 parallèles entre eux et perpendiculaires aux flancs 12 de la cavité de connexion 7.

On prévoit en outre dans cet exemple que l'axe transversal 8 comporte au moins une cavité 11 agencée à une extrémité de l'axe transversal 8 raccordée à un flanc 12 de la cavité de connexion 7 (figure 3).

Les cavités 11 de l'axe transversal 8 sont ici des cavités traversantes 11 qui traversent l'axe transversal 8 de part en part. Elles sont localisées à la zone de contact entre l'axe transversal 8 et les flancs 12 de la cavité de connexion 7, ce qui permet de diminuer la surface de cette zone de contact. On évite ainsi les risques de retassures au cours de la fabrication du balai 2, suite au refroidissement de la cavité de connexion 7, ce qui permet d'augmenter la résistance de l'axe transversal 8. Egalement, les cavités traversantes 11 permettent de mieux répartir le matériau de moulage de la cavité de connexion 7, évitant la formation de bulles d'air à l'intérieur de l'axe transversal 8.

Selon un exemple de réalisation illustré en figure 3, la cavité de connexion 7 comporte deux cavités 11 traversantes, chaque cavité 11 étant ménagée à une extrémité respective de l'axe transversal 8 raccordée à un flanc 12 respectif de la cavité de connexion 7.

Selon un exemple de réalisation, la cavité 11 s'étend dans la direction verticale V, parallèlement aux méplats 9, de sorte que la direction principale de la cavité 11 croise perpendiculairement l'axe central de l'axe transversal 8.

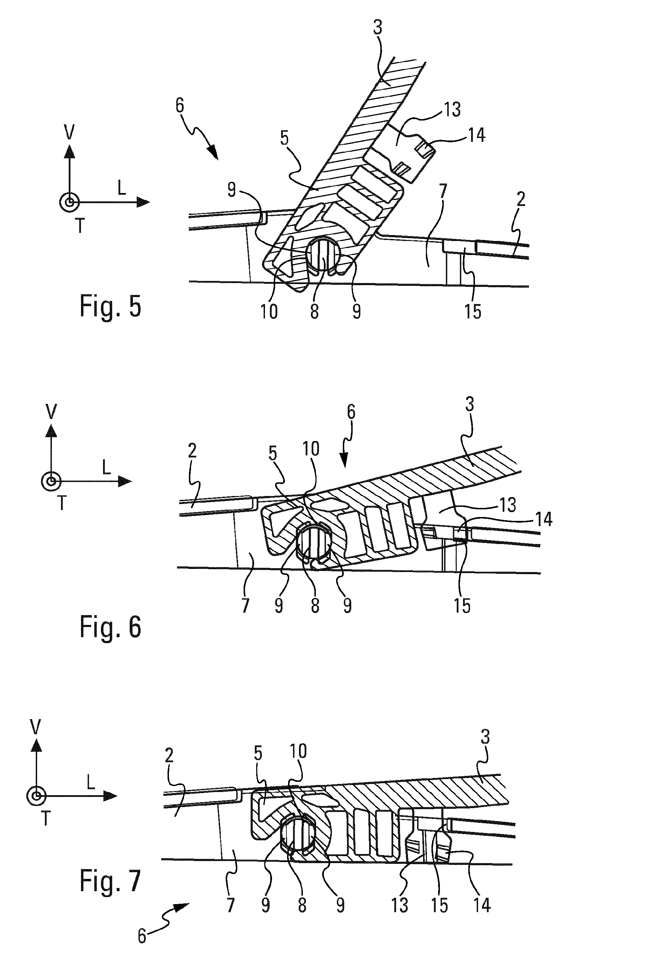

En référence à la figure 4, l'extrémité 5 du bras d'actionnement 3 comprend un logement d'articulation 10 partiellement cylindrique, complémentaire à la portion cylindrique de l'axe transversal 8 du balai 2. L'ouverture du logement d'articulation 10 coïncide avec la dimension la plus étroite de la section de l'axe transversal 8. Ainsi, lorsque l'axe transversal 8 du balai 2 est présenté à l'extrémité 5 du bras d'actionnement 3 avec l'orientation appropriée, l'axe transversal 8 du balai 2 peut être reçu dans le logement d'articulation 10 (figure 5). Dans cette position, dite d'assemblage, le balai 2 peut pivoter autour du bras d'actionnement 3 auquel il est articulé et peut être détaché du bras 3.

Le balai 2 peut également prendre une position de verrouillage (figures 6 et 7) dans laquelle le pivotement du balai 2 autour du bras d'actionnement 3 est limité, ce qui évite le retournement du balai 2 contre le panneau vitré ou même, la perte du balai 2 par exemple lors du nettoyage du balai 2. Dans cette position de verrouillage, le balai 2 et le bras d'actionnement 3 peuvent prendre la position d'essuyage ou la position débrayée.

Selon un exemple de réalisation, le bras d'actionnement 3 peut comporter une languette 13 flexible à l'arrière du logement d'articulation 10, comprenant un ou plusieurs ergots de verrouillage 14. La languette 13 coopère par déformation élastique avec la cavité de connexion 7 du balai 2 dans une position de verrouillage pour laquelle le pivotement du balai 2 par rapport au bras 3 est limité. Le passage en position de verrouillage est réalisé manuellement par montage en force de la languette 13 flexible dans une fente de la cavité de connexion 7. Le pivotement du balai d'essuie-glace 2 est limité par rapport au bras d'actionnement 3 par la mise en butée d'un ou plusieurs ergots de verrouillage 14 avec une paroi supérieure 15 de la fente de la cavité de connexion 7.

Ainsi, en position d'assemblage illustrée en figure 5, la languette 13 est à l'écart de la cavité de connexion 7.

En position de verrouillage illustrée par les figures 6 et 7, le pivotement du balai d'essuie-glace 2 par rapport au bras d'actionnement 3 est limité par la mise en butée de l'ergot de verrouillage 13 avec la cavité de connexion 7. Le balai d'essuie-glace 2 ne peut pas s'échapper du bras d'actionnement 3.

En position d'essuyage (figure 7), la direction principale du balai d'essuie-glace 2 s'étend sensiblement dans la même direction que celle du bras d'actionnement 3. L'ergot de verrouillage 14 n'est pas en butée avec la cavité de connexion 7. Le balai d'essuie-glace 2 est donc libre de pivoter autour de l'axe transversal 8 avec un angle limité entre la position d'essuyage et une position de butée, dite « prêt à être désenclenché », ce qui garantit l'anti-retournement du balai.

## Revendications

1. Dispositif de connexion (6) entre un bras (3) et un balai d'essuie-glace (2), ledit dispositif comprenant un élément de liaison comprenant une cavité de connexion (7), ladite cavité de connexion (7) comprenant un axe transversal (8) configuré pour coopérer avec une extrémité (5) du bras d'actionnement (3) pour articuler le balai d'essuie-glace (2) audit bras d'actionnement (3), **caractérisé en ce que** l'axe transversal (8) comprend au moins une cavité (11).

2. Dispositif de connexion (6) selon la revendication 1, dans lequel ladite cavité (11) de l'axe transversal (8) est agencée à une extrémité longitudinale de l'axe transversal (8).

3. Dispositif de connexion (6) selon l'une des revendications 1 ou 2, dans lequel ladite cavité (11) de l'axe transversal (8) s'étend depuis un flanc (12) de la cavité de connexion (7).

4. Dispositif de connexion (6) selon l'une des revendications 1 à 3, dans lequel ladite cavité (11) de l'axe transversal (8) est traversante.

5. Dispositif de connexion (6) selon l'une des revendications 1 à 4, dans lequel l'axe transversal (8) comporte deux cavités (11), notamment deux cavités traversantes.

6. Dispositif de connexion (6) selon la revendication précédente, les deux cavités (11) étant ménagées respectivement à une extrémité de l'axe transversal (8) raccordée à un flanc (12) respectif de la cavité de connexion (7).

7. Dispositif de connexion (6) selon l'une des revendications précédentes, dans lequel la direction principale (V) de l'au moins une cavité (11) de l'axe transversal (8) croise l'axe central de l'axe transversal (8).

8. Dispositif de connexion (6) selon l'une des revendications précédentes, dans lequel la direction principale (V) de l'au moins une cavité (11) est perpendiculaire à l'axe central de l'axe transversal (8).

9. Dispositif de connexion (6) selon l'une des revendications précédentes, dans lequel l'axe transversal (8) comprend au moins un méplat (9).

10. Dispositif de connexion (6) selon la revendication précédente, dans lequel ledit méplat (9) est perpendiculaire à au moins un flanc (12) de la cavité de connexion (7).

11. Dispositif de connexion (6) selon l'une des revendications 8 ou 9, dans lequel la direction principale (V) de l'au moins une cavité (11) de l'axe transversal (8) est parallèle au méplat (9).

12. Dispositif de connexion (6) selon l'une des revendications précédentes, dans lequel la cavité de connexion (7) est obtenue par moulage, notamment d'une matière plastique.

13. Balai d'essuie-glace (2) comprenant un dispositif de connexion selon l'une quelconque des revendications précédentes.

14. Ensemble d'essuyage **caractérisé en ce qu'**il comporte un balai d'essuie-glace (2) selon la revendication précédente et un bras d'actionnement (3).
